# EUROPEAN PATENT APPLICATION

(11) **EP 1 691 494 A1**
(43) Date of publication of application: **16.08.2006**
(21) Application number: 03818958.5
(22) Date of filing: 05.11.2003
(51) Int. Cl.: H04B 10/00, H04B 10/16, G09B 7/02, G09B 19/00

(54) **ANSWER TOTALIZER/ANALYZER**

(71) Applicant: Kabushiki Kaisha Media Technical, Tokyo 135-0015 (JP)
(72) Inventor: KANDA, Mikio, Saitama-shi, Saitama 330-0824 (JP)
(74) Representative: Granleese, Rhian Jane
(86) International application number: PCT/JP2003/014124
(87) International publication number: WO 2005/046091

(57) **Abstract**

An answer totaling and analyzing apparatus according to the present invention possesses an auxiliary light-projecting and receiving unit relaying a light-emitting and reception between a center unit and answer units, in addition to the center unit and the answer units exchanging signals by optical pulses. The center unit assigns answer periods of the respective answer units by answer command signals for the plural answer units. The respective answer units can reply answers for questions with a very small number of pulses by using a method in which contents of the answer are represented by a time position of an optical pulse transmission in the answer period assigned to the answer unit. The center unit discriminates the answer signals from the respective answer units by this communication method and detects the answer and totalizes and analyzes the answer. The light-emitting and receptions between the answer units and the center unit are relayed by using the auxiliary light-projecting and receiving unit, and thereby, it becomes possible to use in a large meeting room and to use a much number of answer units which are conventionally difficult, and a simple and stable answer totalizing and analyzing can be performed.

## Description

### Technical Field

The present invention relates to an answer totaling and analyzing apparatus, and in detail, to totaling and analyzing apparatus capable of totaling and analyzing answers for questions immediately when the questions are asked for participants at various meetings.

### Background Art

An answer totaling and analyzing apparatus provides plural answer units and a center apparatus, and is used at various meeting. Using the answer totaling and analyzing apparatus, a questioner such as a chairman gives questions to a number of participants, and then the participants transmit answer signals to a center unit by answer units, and the answer signals received by the center unit are totalized and analyzed in real time. The questioner can immediately show totalized results of the answers to the participants using the answer totaling and analyzing apparatus. When information for representing responders are involved in the answer signals, the apparatus can perform totaling and analyzing multiply using this information.

An existing answer totaling and analyzing apparatus is elaborate in itself, and the apparatus requires a lot of labor for installing and withdrawing. Therefore, the scope for the application of the apparatus has been limited. Consequently, a simplification of the apparatus is one of the major technical issues for the answer totaling and analyzing apparatus. Then, the usage of the apparatus is expected to spread widely if a simplifyed answer totaling and analyzing apparatus carrying required capability is developed. When a conveniently usable answer totaling and analyzing apparatus is available, the usage of the apparatus is expected to be applied to wide field such as education and amusement, in addition to the use at an international conference on medicine in which discussions are brought forward while sending to doctors attending in the meeting room questions, receiving and totaling answers about medical treatments they perform or medicines they prescribe for each of various cases of diseases, and uses for consumers' behavior survey such as for food products, various hobbies, and travels, and so on.

Another major technical issue in the answer totaling and analyzing apparatus is to extend availability of the apparatus for a large meeting with many responders. If the apparatus can totalize and analyze answered results from many responders at a large meeting and display the result immediately, the answer totaling and analyzing apparatus can enhances its availability significantly.

For simplifying the answer totaling analyzing apparatus for communication between an answer unit carried by a responder and a center unit of the apparatus, a wireless communication system is preferable compared with a wired system. For an apparatus using the wireless communication system, works on wiring and withdrawing at the installation using wired communication system does not exist. An example of the answer totaling and analyzing apparatus using wireless communication system is known as described in Patent Document 1,in which an apparatus using a radio frequency wave is described. For using the radio waves, however, implement actions are required for avoiding giving affect on other electronic apparatus because severe restrictions are implemented for the use of the radio wave.

As a method for realizing a wireless communication between the answer unit and the center unit, a method of using a light such as an infrared light is known other than the method of using the radio waves. When a light such as the infrared light is used, effects upon other electronic apparatus at the time of communication can be reduced compared to the case when the radio wave is used. The answer totaling and analyzing apparatus using the infrared light as the communication means is described in Patent Document 2. In the communication of an answer signal by the infrared light of this apparatus, a method in which a signal encoded into a code using a pulse train of the infrared light is used. Namely, the method similar to the method for radio waves is used. In this communication method, however, there is a problem of requiring too many light pulses for emitting and receiving the encoded signal. For the case described in the Patent Document 2, an example of providing 128 answer units is shown. To increase the number of the answer units in this method, the number of light pulses for emitting and receiving must be increased to that extent.

In the answer totaling and analyzing apparatus using these existing communication method, much time is required for the communication to that extent when the number of the answer units are increased, since the number of pulses for emitting an answer from an answer units is large. As a result, it becomes difficult to fully accomplish the function of performing totalizing and analyzing answers in a short time and immediately show the result to the participants when the number of the answer units is increased. As methods for decreasing the time required for receiving answers, speed up of communication using a parallelism and so on are considered, but these methods have problems of bringing sophisticated construction of answer totaling and analyzing apparatus, far from a simplified apparatus.

When the answer totaling and analyzing apparatus is used at a large meeting and many answer units are used, there is a problem of largely attenuated received intensity of emitted signal because a distance between the center unit and the answer unit at a back end of the large meeting room is very large. Consequently, we must increase emitted optical pulse intensity, or enhance sensitivity of a light-receiving unit. Replying to these requirements are another large problem for completing the answer totaling and analyzing apparatus as a simple apparatus.

When the meeting room is large, the answer units that the responders carries are placed at a position far away from the center apparatus on one hand, and also placed in a vicinity of the center apparatus on the other hand. Therefore, there exist both very weak signals and very strong signals from the answer units as the receiving answer signals that the center unit receives. Consequently, there was an issue of requirement of increasing the sensitivity of a light-receiving unit for receiving a weak answer light signal from the distant answer unit, and requirement of sufficient stability for avoiding saturation or ringing to very strong answer signals arrived from very near answer units. There were the same issues stated above to the answer units.

In Patent Document 3, an intermediate station for data transmission among subscriber stations within an indoor local communication network is described. The intermediate station is attached, at a ceiling to relay the data transmission between the subscriber stations as example. In this system, the data transmission is performed in a half-duplex operation, and therefore, there is a problem of impossibility of simultaneously sending and receiving data between two stations. Then, at the intermediate station, the receiving of signals is stopped for a predetermined time from immediately after the reception of one signal as a method of avoiding this problem. This method prevents received one signal from transmitted through plural transmission paths redundantly when the plural intermediate stations are provided.

However, this system is concerned with the local communication network using the half-duplex operation, and a communication mode is basically different from the answer totaling and analyzing apparatus performing a two-way communication between the answer unit and the center unit.

The present inventors provided a simplified answer totaling and analyzing apparatus capable of totaling and analyzing answers from many responders by an invention described in Patent Document 4 using a communication by optical signals. Major technical issues to be approached for expanding for their usage of the answer totaling and analyzing apparatus are to make it possible to use stably in a larger meeting room and to correspond to a meeting room with a complicated structure, and to totalize rapidly even if the number of the answer units is increased more, exerting the simplicity of the invented apparatus.

An object of the present invention is to provide an answer to the issues, totaling and analyzing apparatus capable of being used stably in a large or complicated structured room without any restriction by the meeting room convening a conference, and capable of performing a rapid totaling and analysis even if the number of the answer units becomes very large.

Patent Document 1: Japanese Patent Laid-open Application No. Sho 58-117737

Patent Document 2: Translated National Publication of Patent Application No. Hei 10-501937

Patent Document 3: Translated National Publication of Patent Application No. Hei 4-505083 (Japanese Patent Publication No. Hei 7-93626)

Patent Document 4: International Publication No. WO 01/73630 A1

### Disclosure of the Invention

An answer totaling and analyzing apparatus of the present invention comprises a center unit, plural answer units, and an auxiliary light-projecting and receiving unit described in the following.

The center unit of the present invention comprises the following constituents. An answer command signal generating means assigns an answer period in which a set of plural windows for answer signal is set on a time base for the individual plural answer units, and generates a signal to command a transmission of an answer signal. An answer command signal light-emitting means emits light signal pulses of the answer command as an optical signal. An answer signal light-receiving means receives light signals of the answer from the plural answer units. And a totaling and analyzing means detects, totals, and analyzes answers from the received answer signals. The plural answer units of the present invention individually comprise the following constituents. An answer command signal light receiving means receives the answer command signal light emitted by the center unit. An answer means selects the window for answer signal existing at a time position corresponding to an answer from among plural windows for answer signal supposed within the answer period assigned by the answer command signal, transmitting a pulse signal within the window for answer signal to represent contents of answer as an answer signal. An answer signal light-emitting means emits an optical signal light converted from the pulse signal transmitted by the answer means. Further, the auxiliary light projecting and receiving unit of the present invention comprises the following constituents. A relay light-receiving means receives light signals emitted by any one of the center unit, the plural answer units, and another auxiliary light-projecting and receiving unit when plural auxiliary light projecting and receiving units exist. A relay signal generating means generates a relay signal in accordance with the received light signal. And a relay light emitting means emits the relayed signal as an optical light.

Setting of ID numbers is performed as a numbering for the individual plural answer units of the answer totaling and analyzing apparatus of the present invention, and the answer periods are assigned by the answer command signal synchronizing pulses emitted from the center unit for the individual answer units in accordance with the ID numbers.

In a constitution of the answer totaling and analyzing apparatus of the present invention, the auxiliary light projecting and receiving unit supports a communication between the center unit and the answer units, and the communication between the center unit and the answer units are significantly facilitated. Namely, in the apparatus of the present invention, the communication is performed without any disturbance, even when a meeting room the answer totaling and analyzing apparatus is used is large and a distance between the center unit and the answer unit is large, and even when the meeting room has a complicated structure and the direct transmission path between the center unit and the answer unit cannot be formed, because a transmission path between the center unit and the answer unit is formed by the assistance of the auxiliary light-projecting and receiving unit relaying the communication signal.

Furthermore, it is possible to transmit and receive an answer signal very simply with minimal number of pulses according to the apparatus of the present invention, because a method representing contents of the answer is adopted that the answer signal from each of plural answer units is expressed by choosing windows at the time position corresponding to the answer from each set of plural windows for answer signal in the answer period specified by the answer command signal, and emitting a pulse for answer signal within each of the chosen windows.

The present invention makes it possible to use the answer totaling and analyzing apparatus at a larger meeting room or at a meeting room having a complicated structure, and makes it possible to drastically increase the number of answer units usable in the place while keeping an advantage of simplicity of the apparatus, by installing the auxiliary light-projecting and receiving unit described above to the answer totaling and analyzing apparatus using the simple answer signal emitting and receiving method. Besides, the constitution of the present invention enables composing an apparatus capable of rapidly processing answer signals from further more number of answer units, and simply and efficiently performing the answer signal totalizing and analyzing. According to the present invention, it is expected that an application span of the answer totaling and analyzing apparatus can be widely expanded.

The answer period defined by the answer command signal of the center unit of the apparatus according to the present invention may be constituted by a single answer section, or the answer period for each of plural answer units emitting answer signals may be divided into the plural answer section by synchronizing pulses. When the answer period is divided into the plural answer sections by synchronizing pulses, the answer signals from each of the plural answer units may be emitted in a manner in which the pulses of the answer signals are emitted in a window corresponding to the answer selected from plural windows set for each plural answer sections in the answer period.

As stated above, the answer with detailed contents can be made by the simple communication method. When the individual answer periods assigned for each answer unit are divided into plural answer sections, the answer signals corresponding to the selected and inputted answers by responders for every question are placed in the individual windows selected from each set of windows supposed on a time base in the answer sections, and emitted within a time width of the window as a light pulse.

The communication in the answer totaling and analyzing apparatus according to the present invention has a feature in which the answer signals from the answer units are sequentially emitted one by one placing some time interval from the individual plural answer units assigned by the answer command signal of the center unit, therefore the answer signals from two or more answer units, received via any one of the transmission paths, do not overlap in a time. According to this feature, the answer totaling and analyzing apparatus of the present invention has an advantage of constituting simple communication apparatus.

It is possible to set time positions of the set of plural windows for answer signal at center portions of individual the individual answer sections, in the answer totaling and analyzing apparatus of the present invention. If the time positions of the set of plural windows for answer signal are set at the center portion of individual answer sections, namely, at the time positions fully away from both ends of the segments. When the plural auxiliary light projecting and receiving units are provided, it is prevented to respond repeatedly to the same answer signal caused by ringing, and prevented to respond repeatedly to the signals sent and received In the auxiliary light-emitting and receiving unit of the answer totaling and analyzing apparatus according to the present invention, a light-emitting pausing means can be provided in which the light-emitting is paused for a time shorter than the minimum pulse interval in a regular signal pulse train immediately after one signal pulse is light-received and this signal pulse is relayed and light-emitted. Then, the same answer signal light-emitting and receiving repeatedly by ringing is prevented, and the same answer signal light emitting and receiving repeatedly is prevented also when the plural auxiliary light projecting and receiving units are provided and signals are sent and received between the auxiliary light projecting and receiving units.

Here, two auxiliary light-projecting and receiving units are located with intervals of 20 m, and a relation between a time required for exchanging signals with the most distant answer unit and the quiescent period is described as an example. A time from the light receiving to the light emitting required for an auxiliary light projecting and receiving unit is approximately 0.2 µs. When a signal passes through all these two auxiliary light projecting and receiving units sequentially, a total time for the two auxiliary light-projecting and receiving units from the signal input to the signal output is approximately 0.4 µs for one direction. Therefore, the total time for going and returning is approximately 0.8 µs. Then, the total time is approximately 1.0 µs adding the time required in the process of an answer unit from the light receiving to the light emitting of 0.2 µs. When the distance between the center light-projecting and receiving unit and its nearest auxiliary light-projecting and receiving unit is 20m and the distance between the most distant answer unit and its nearest auxiliary light-projecting and receiving unit are also 20 m, the total distance in which a light propagates between the center light-projecting and receiving unit and the answer unit is 60 m. Then, the time required for the light to propagate the distance is 0.18 µs for one direction, and 0.36 µs for going and returning. Consequently, a total time required for the signal going and returning between the most distant answer unit and the central unit is 1.36 µs. If the time width of the window for answer signal is set to be 2 µs for example, this delay time falls within a time width, and the light-emitting is paused immediately after this signal is received and light-emitted. If the pausing period is taken for 14 µs, it is sufficient to prevent the repeat emission responding to the same answer signal because of ringing and also prevent receiving the same answer signal arrived through different paths redundantly.

In the answer totaling and analyzing apparatus according to the present invention, an answer signal sending and receiving communication is in a form of choosing a window from a set of windows corresponding to the answer in the answer period specified for each answer unit by the answer command signal, and the answer signal pulse is emitted to this time position, as a means for sending the answer signal from the plural answer units to the center unit. By using the method reducing the number of pulses for the answer significantly compared with the number of pulses for a normal communication method and on this advantage, sending and receiving optical signals simply and easily are made possible and by providing the simple auxiliary light-projecting and receiving unit on a transmission path of the optical signal in this way. Consequently, it is possible to send information in simple and stable way keeping intensity of the optical signal and to transmit information required in various application cases of the present apparatus, even when the distance between the center unit and the answer unit is large, or an obstruction may exist between the center unit and the answer unit.

In the present invention, a large advantage of reducing power consumption of optical pulse output devices of light-emitting and receiving units of the answer units and also of the center unit can be obtained. In particular, a large advantage of reducing battery power consumption in the answer unit is obtained by providing the auxiliary light-projecting and receiving unit on the transmission path of the optical signals. Besides, light-receiving units receiving optical signals with relatively low sensitivity can be used. Then, the light-receiving portion is simplified and actions for noises or the ringing is also simplified.

According to such a constitution of the present invention, the restriction for the usable number of answer units of the answer totaling and analyzing apparatus is now removed, and the number of the answer units can be increased drastically. For example, it is possible to apply to a large meeting in a scale of 2000 participants, and to totalize and analyze answers for questions obtained from of all the participants rapidly and smoothly.

In the answer totaling and analyzing apparatus used at a large meeting, many answer units are required according to the number of participants. The answer units, therefore, are desired to be simple and to be low in battery exchange frequency. Therefore, the light-emitting element of the answer unit is desirable to be small, capable of low voltage operation, and high light-emitting efficiency with high safety.

A light-emitting diode has a response speed of several 10 MHz to several 100 MHz when it does not emit light with high power. However, after emitting an optical pulse with high power, a predetermined recovery time is necessary. For example, when the light-emitting diode is operated with a maximum power, it is preferable that a duty ratio is lowered to 1 /100 or less. When the optical pulse signal with high-power is required to transmit from the answer unit, the number of light pulses emitted in a unit of time is desirable to be kept as small as possible and the pulse interval is desirable not to be small. The answer totaling and analyzing apparatus of the present invention uses an answer communication method in which the answer signal is emitted with a quite small number of optical pulses, and the apparatus matches very well to the characteristics of the light-emitting diode.

Infrared light is preferable as the light for an information transmission in the present invention. Light-emitting diodes with high efficiency are available for infrared light. Infrared light shows small effect upon noise by other light sources and so on and visual bothering of infrared light is also small compared with a visible light.

The auxiliary light-projecting and receiving unit of the answer totaling and receiving apparatus of the present invention can be disposed at an upper space of a meeting room in which the plural answer units are disposed. Normally, there is a relatively wide space at the upper portion of the meeting room available for the answer totaling and analyzing apparatus. If the auxiliary light projecting and receiving unit is disposed at this space, responders transmit the signals from the answer units to an auxiliary light projecting and receiving unit near the answer units. Then, the communication between the answer units and the center unit can be performed stably via the auxiliary light projecting and receiving unit.

In the meeting room where the answer totaling and analyzing apparatus is used, a balloon can be used as a means for disposing the auxiliary light-projecting and receiving unit at the upper space of the meeting room. By using the balloon, the auxiliary light projecting and receiving unit can easily be disposed at the upper space of the meeting room. As a gas sealed in the balloon, helium gas is particularly preferable which is an inert gas having a smaller specific gravity than air.

In the answer totaling and analyzing apparatus of the present invention, the center unit includes a calibration signal transmitting means transmitting a calibration signal preceding to a signal individually specifying the answer periods for the plural answer units within a series of answer command signal. The plural answer units individually include calibration response signal transmitting means transmitting a calibration response signal responding to the calibration signal preceded to the transmission of the answer signal. The center unit may further includes a read time adjusting means measuring signal transmission times between the center unit and the individual plural answer units from time differences between the calibration signal transmitted by the center unit and the individual calibration response signals replied from the individual plural answer units, and adjusting read times of the answer signals from the individual plural answer units based on the measured signal transmission times.

When a number of auxiliary light-projecting and receiving units are used at a large meeting room, a time required for a transmission and reception of signals between the center unit and the distant answer unit becomes large. When the calibration signal and its response signal are not used, a time width of the window for answer signal must be taken large as that much. When the read times of the answer signals from the individual answer units are adjusted to be set for every answer units using the calibration signal and its response signal, a large advantage is obtained that increasing the window time width for answer signal is not necessary.

For example, when five auxiliary light-projecting and receiving units are located with intervals of 20 m, the time required for emitting and receiving signals between the center unit and the distant answer unit is estimated under a condition similar to the example described above. The total time required from the input to the output of signals for the five auxiliary light projecting and receiving units is approximately 2.0 µs for going and returning. The time required from the light-receiving to the light-emitting in the answer unit of approximately 0.2 µs and the time required for a light to propagate and reciprocate for the distance of 120 m between the center light-projecting and receiving units and the answer units of 0.72 µs are added to the time obtained above. Then the total time is 2.72 µs. When the calibration signal and its response signal are not used, the individual time widths of the windows for answer signal must be set to a value larger than this total time. Consequently, much time is required for emitting and receiving signals. When the read times of the answer signals from the individual answer units are controlled by using the calibration signal and its response signal, however, the width of the window for answer signal can be set narrower because it is not necessary to make the time width large.

As stated above, in the answer totaling and analyzing apparatus of the present invention, the arrival time of the signal from the answer unit is estimated by using the measured transmission time of the signal in each time preceding to the receiving the answer signals for each of answer units. Then the answer signal light-receiving period of the answer unit can be set appropriately on a time base. As a result, it becomes possible to set the width of the window for answer signal narrower, and to increase the number of answer sections within the same answer period and the number of windows for answer signal within the individual answer sections. Furthermore, it becomes possible to increase quantity of information treated at the answer signal in the answer totaling and analyzing apparatus, to increase the number of answer units, or to reduce the light projecting and receiving time.

### Brief Description of Drawings

FIG. 1 is a block diagram schematically showing a basic constitution of an answer totaling and analyzing apparatus of the present invention.
FIG. 2 is a block diagram schematically showing a constitution of an apparatus according to an embodiment of the answer totaling and analyzing apparatus of the present invention.
FIG. 3 is a view showing a flow of a signal when a signal is given and received between a center unit and answer units via an auxiliary light projecting and receiving unit in an embodiment of the answer totaling and analyzing unit of the present invention.
FIG. 4A, FIG. 4B, and FIG. 4C are time charts showing relations between an answer command signal pulse transmitted by the center unit and an answer signal pulse of the answer unit responding to the answer command signal pulse in an embodiment of the answer totaling and analyzing apparatus of the present invention.
FIG. 5 is a block diagram showing a constitution of the answer unit according to an embodiment of the answer totaling and analyzing apparatus of the present invention.
FIG. 6 is a block diagram showing a constitution of the auxiliary light-projecting and receiving unit in an embodiment of the answer totaling and analyzing apparatus of the present invention;
FIG. 7A is a view showing an embodiment of a circuitry of a control and signal generating portion in the auxiliary light projecting and receiving unit of the answer totaling and analyzing apparatus of the present invention, and FIG. 7B is a view showing a quiescent period of light-emitting of the auxiliary light projecting and receiving unit.
FIG. 8 is a view schematically showing an embodiment of a spatial disposition of the auxiliary light projecting and receiving units in the answer totaling and analyzing apparatus of the present invention.
FIG. 9A, FIG. 9B, and FIG. 9C are time charts showing an answer command signal in an embodiment of the answer totaling and analyzing apparatus of the present invention providing a calibration signal, and an answer signal of the answer unit responding to this, is represented by a signal received at the center unit.

### Best Mode for Implementing the Invention

### (Embodiment 1) Basic constitution and operation of answer totaling and analyzing apparatus

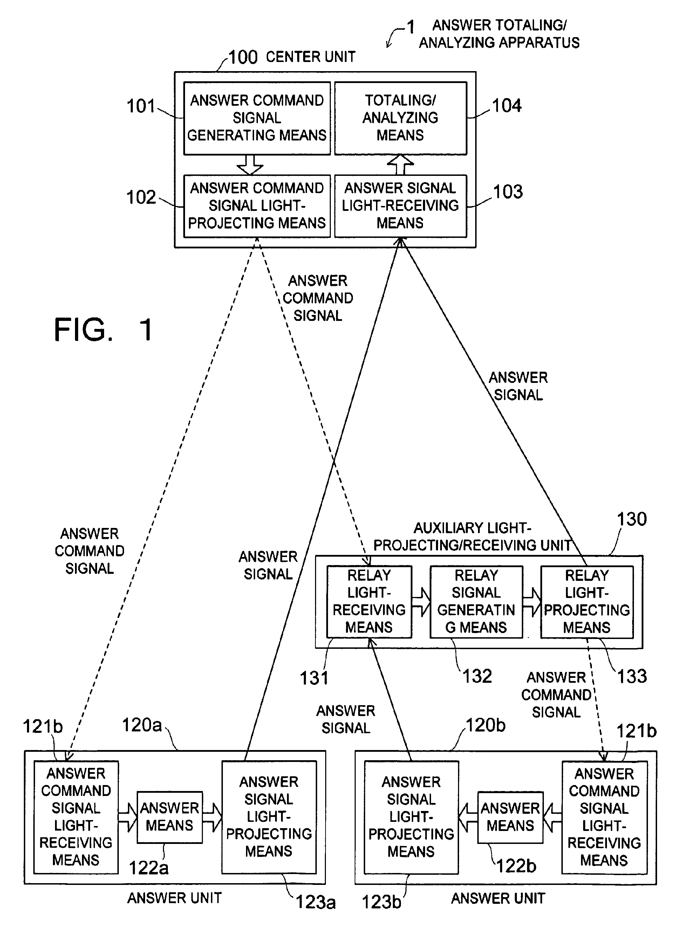

FIG. 1 is a block diagram showing a basic constitution of an answer totaling and analyzing apparatus of the present invention. In FIG. 1, a center unit 100 of an answer totaling and analyzing apparatus 1 includes an answer command signal generating means 101, an answer command signal light-projecting means 102, an answer signal light-receiving means 103, and a totaling and analyzing means 104. Besides, plural answer units 120 (a, b) individually include an answer command signal light-receiving means 121, an answer means 122, and an answer signal light-projecting means 123. Further, an auxiliary light projecting and receiving unit 130 includes a relay light-receiving means 131, a relay signal generating means 132, and a relay light projecting means 133.

In this constitution, the answer command signal generating means 101 of the center unit 100 generates a series of answer command signal specifying every answer period in which a set of plural windows for answer signal are supposed to be set on a time base, and commanding a transmission of an answer signal, for each of the plural answer units 120. The answer command signal light-projecting means 102 converts the answer command signal generated by the answer command signal generating means 101 into optical signal, and projects this optical signal for the plural answer units 120. Besides, the answer signal light-receiving means 103 of the center unit 100 light-receives the answer signals from the plural answer units 120. The totaling and analyzing means 104 detects, totalizes and analyzes answers from the answer signal received by the answer signal light-receiving means 103.

In this constitution, the answer command signal light-receiving means 121 (a, b) for each of the plural answer units 120 (a, b), on the other hand, receive the answer command signal light emitted by the center unit 100. Each of the answer means 122 (a, b) chooses a window for answer signal at a time position corresponding to the inputted answer, from the set of plural windows for answer signal within the answer period specified by the answer command signal received by the light-receiving means 121 (a, b), and transmits a pulse of the answer signal at a position within the window. The answer signal light projecting means 123 (a, b) convert the pulse signal output of the answer means 122 into an optical signal and emit toward the center unit 100.

Besides, the relay light-receiving means 131 of the auxiliary light-projecting and receiving unit 130 in this constitution receives to relay the signal light-emitted by the center unit 100. The relay signal generating means 132 generates a relay signal in accordance with the received signal for relaying by the relay light-receiving means 131. The relay light-projecting means 133 converts the relay signal generated by the relay signal generating means 132 and emits light as an optical signal pulse. Besides, the relay light-receiving means 131 of the auxiliary light-projecting and receiving unit 130 also receives and relays a signal emitted by the answer unit 120b. In this case, the relay signal generating means 132 also generates the relay signal in accordance with the signal received by the relay light-receiving means 131, and the relay light-projecting means 133 converts the relay signal generated by the relay signal generating means 132 and emits light as an optical signal pulse. Further, when the auxiliary light-projecting and receiving units 130 exist in plural, the relay light-receiving means 131 of the auxiliary light-projecting and receiving unit 130 also receives and relays a signal from another auxiliary light-projecting and receiving unit which is not shown in the figure. In this case also, the relay signal generating means 132 generates the relay signal in accordance with the signal received for relaying by the relay light-receiving means 131, and the relay light-projecting means 133 converts the relay signal generated by the relay signal generating means 132 and emits light as an optical signal pulse.

As stated above, the auxiliary light-projecting and receiving unit 130 supports or assists the communication between the center unit 100 and the plural answer units 120, and thereby, the communication between them is facilitated smoothly.

### (Embodiment 2) Specific constitution and operation of answer totaling and analyzing apparatus

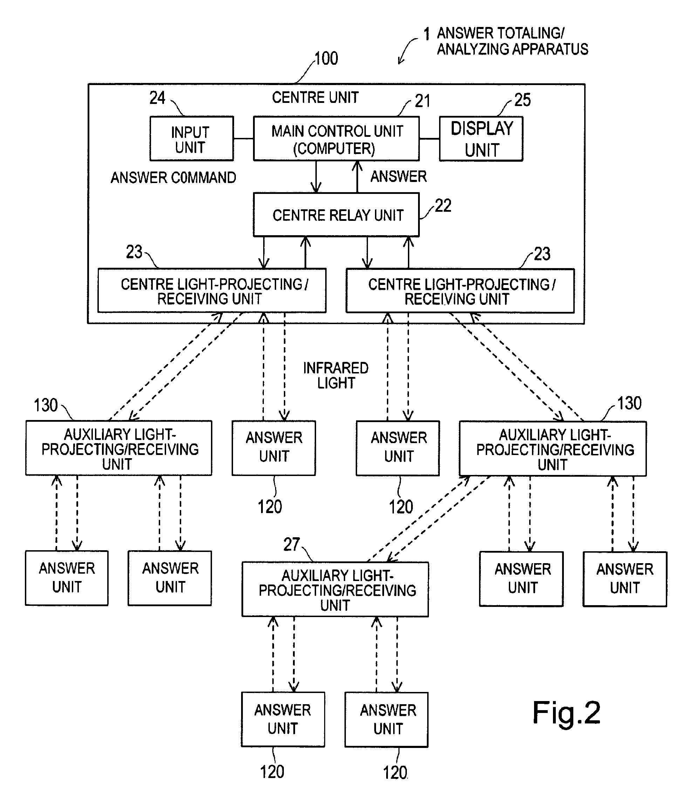

The above-stated answer totaling and analyzing apparatus 1 may have a specific constitution as shown by a block diagram in FIG. 2.

In FIG. 2, the answer totaling and analyzing apparatus 1 is composed of the center unit 100, the plural answer units 120, and the plural number of auxiliary light-projecting and receiving units 130.

The center unit 100 of the answer totaling and analyzing apparatus 1 has a main control unit 21 and a center relay unit 22 composing the answer command signal generating means 101 and the totaling and analyzing means 104, and center light-projecting and receiving units 23 composing the answer command signal light-projecting means 102 and the answer signal light-receiving means 103. An input unit 24 and a large-sized display unit 25 are connected to the main control unit 21. A computer including a CPU, a storage device, an input unit, an output unit, and I and O interfaces is used as the main control unit 21.

In this constitution, when a questioner such as a chairman or an operator performs an input of data or a generation command of the answer command signal to the main control unit 21 by using the input unit 24 of the center unit 100, the main control unit 21 commands a generation of the answer command signal to the center relay unit 22 in accordance with this input. The center relay unit 22 receiving the command from the main control unit 21 generates the answer command signal. The center light projecting and receiving unit 23 converts the answer command signal generated by the center relay unit 22 into a light and emits it.

The answer command signal light emitted from the center light-projecting and receiving unit 23 of the center unit 100 arrives at the individual answer units 120 directly when a distance between the center light-projecting and receiving unit 23 and the answer unit 120 is short and there is no obstruction. When the distance between the center light-projecting and receiving unit 23 and the answer unit 120 is long or there is an obstruction in between, however, the answer command signal light is received by the auxiliary light-projecting and receiving unit 130 placed within a range in which the emitted light attains, and arrives at the answer unit 120 relaying through the auxiliary light-projecting and receiving unit 130, and the answer command signal may arrive at the answer unit 120 after passing through the plural auxiliary light projecting and receiving units 130.

The answer signal based on the answer inputted by a responder is transmitted to the center unit 100 from the answer unit 120 by an optical pulse, responding to the answer command signal light-emitted from the center light-projecting and receiving unit 23 of the center unit 100 and arrived at the answer unit 120 as stated above.

The answer signal arrives at the center light-projecting and receiving unit 23 of the center unit 100 via an opposite route from the transmission path of the answer command signal stated above. Namely, the answer signal light transmitted from the answer unit 120 to the center unit 100 directly arrives at the center light-projecting and receiving unit 23 of the center unit 100 when the distance to the center light-projecting and receiving unit 23 of the center unit 100 is short and the obstruction does not exist. However, the answer signal arrives at the center unit 100 via the auxiliary light projecting and receiving unit 130 when the distance between the answer unit 120 and the center unit 100 is long or there is the obstruction in between. As stated above, the auxiliary light projecting and receiving unit 130 relays the answer command signal, and also relays the answer signal. The answer signal in this case may arrive at the center unit 100 after passing through the plural auxiliary light-projecting and receiving units 130.

The center light-projecting and receiving unit 23 of the center unit 100 receives the optical pulse of the answer signal transmitted from the answer unit 120, converts into an electrical signal, and transmits to the center relay unit 22. At the center relay unit 22, the received electrical signal is converted into an answer data and is inputted to the main control unit 21. At the main control unit 21, the answer data light received from the answer unit 120, converted and inputted, are kept in a memory held by the main control unit 21. The received answers are totalized and analyzed one after another, and the result is shown to the responders displaying by the large-sized display unit 25.

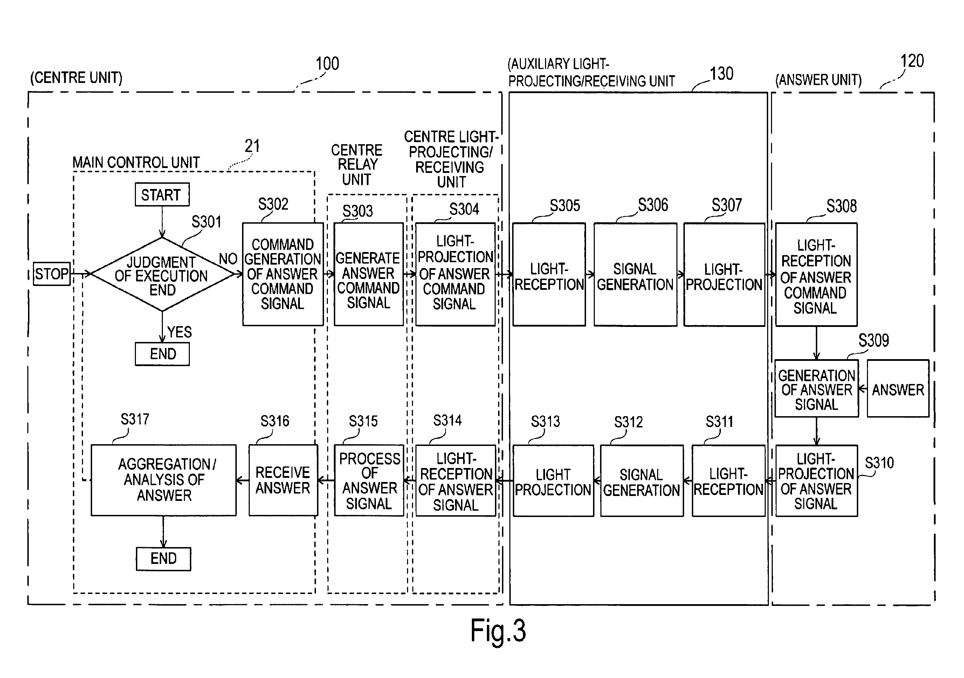

FIG. 3 is a view for explaining main operations of the answer totaling and analyzing apparatus 1, and in particular, the operation is shown when a signal is emitted and received between the center unit 100 and the answer unit 120 via one auxiliary light-projecting and receiving unit.

At the main control unit 21 of the center unit 100 in FIG. 3, the main control unit 21 composing the answer command signal generating unit 101 obtains a judgment that an order for answer stop is not given at an answer step (S301) when an operation of the answer totaling and analyzing apparatus is started, and sends a command to generate the answer command signal to the center relay unit 22 (S302). The center relay unit 22 composing the answer command signal-generating unit 101 generates the answer command by receiving the command (S303). The center light projecting and receiving unit 23 composing the answer command signal light-projecting means 102 emits light of the answer command signal (S304).

At the auxiliary light-projecting and receiving unit 130, the relay light-receiving means 131 receives light of the answer command signal and converts it to electric signal(S305). The relay signal generating means 132 generates a reconstructed signal having an original pulse waveform of the answer command signal as it is performed at (S303) in spite of the waveform received by the relay light-receiving means 131, and transmits to the relay light-projecting means 133(S306). The relay light-projecting means 133 emits the reconstructed answer command signal (S307) as the optical signal having a similar waveform at (S304).

At the answer unit 120b, the answer command signal light-receiving means 121b receives the answer command signal of an optical signal to convert to (S308). The answer means 122b captures the answer period of the answer unit 120b from the answer command signal received by the answer command signal light-receiving means 121b, and generates the answer signal of the answer inputted to the answer unit 120b and ready for outputting at this answer period (S309). The answer signal light-projecting means 123b emits this answer signal as the optical signal (S310).

At the auxiliary light-projecting and receiving unit 130, the relay light-receiving means 131 receives the answer signal of an optical signal to convert to electric signal (S311). The relay signal generating means 132 generates a signal reconstructed (S312) in which a pulse waveform that is originally generated as the signal at (s309). The relay light-projecting means 133 light-projects the reconstructed answer signal as an optical signal (S313) having a similar waveform at (S310).

Incidentally, at the auxiliary light-projecting and receiving unit 130, the operations from the light receiving to the light emitting from S305 to S307 and the operations from the light receiving to the light emitting from S311 to S313 can be performed on the same unit. The auxiliary light projecting and receiving unit 130 may be constituted just to reproduce and emit received light signals, without distinguishing whether the light-received signal is the answer command signal or the answer signal.

At the center unit 100, the center light-projecting and receiving unit 23 composing the answer signal light-receiving means 103 receives light pulse of the answer signal to convert to electric (S314), the center relay unit 22 composing a part of the totaling and analyzing means 104 processes the received answer signal (S315), the main control unit 21 composing the totaling and analyzing means 104 receives the signal processed answer signal to convert for the calculation (S316), and totalize and analyzes it for publication of the answer (S317). The main control unit terminates the generation of the answer command signal when it obtains the judgment that the answer stop order is inputted at the step S301.

There are several other methods for termination of generating the answer command signal. In one method, a totaling and analyzing state of the answer is fed back, and in another method, it is automatically terminated at the time when the number of answers reaches a target number. In still other method, it is automatically terminated at a predetermined time. Besides, the center unit 100 may send a reset signal and a termination signal to the plural answer units 120 at the time of the termination of the generation of the answer command signal, so that the plural answer units 120 are reset to prepare for emitting the next answer signal and a power supply of the answer unit 120 is cut off while the answer signal is not transmitted.

Incidentally, the main control unit 21 of the center unit 100 can be constituted to hold the signal received first as an answer at one answer section in a memory of the main control unit 21 as the answer data of the answer unit 120 corresponding to the answer section, and then to pause receiving the following signals in the answer section, ignoring signals subsequently appeared in the same answer section. Receiving false signals by ringing or other noises is prevented in this way.

Beside above, the main control unit 21 of the center unit 100 can be constituted to rewrite the answer data held at the memory of the main control unit 21 when the answer signal different from the answer signal of a preceding cycle is received at a new cycle of the answer command signal, because the answer is regarded as changed. The totalized and analyzed result of the answer data can be updated receiving the new answer, and contents of displays for showing to the responders using the large-sized display unit 25 also can be updated.

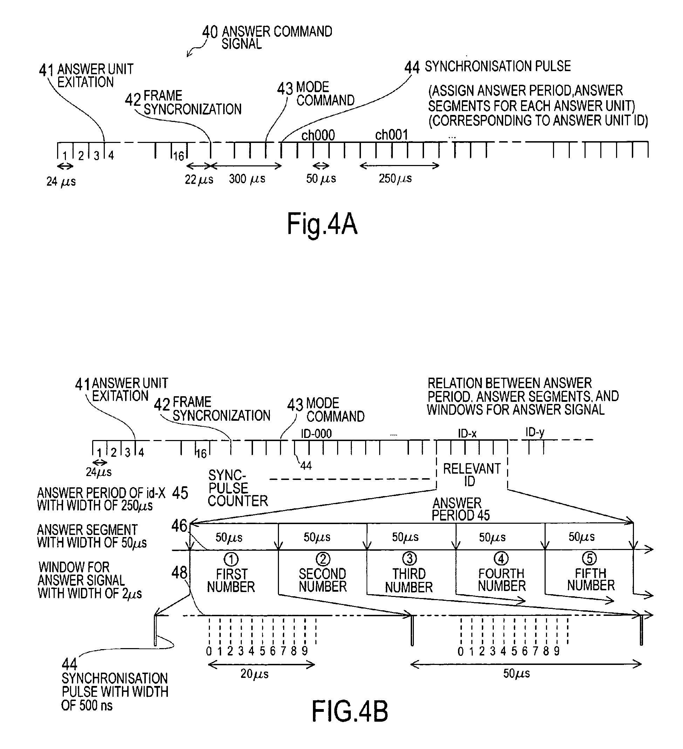

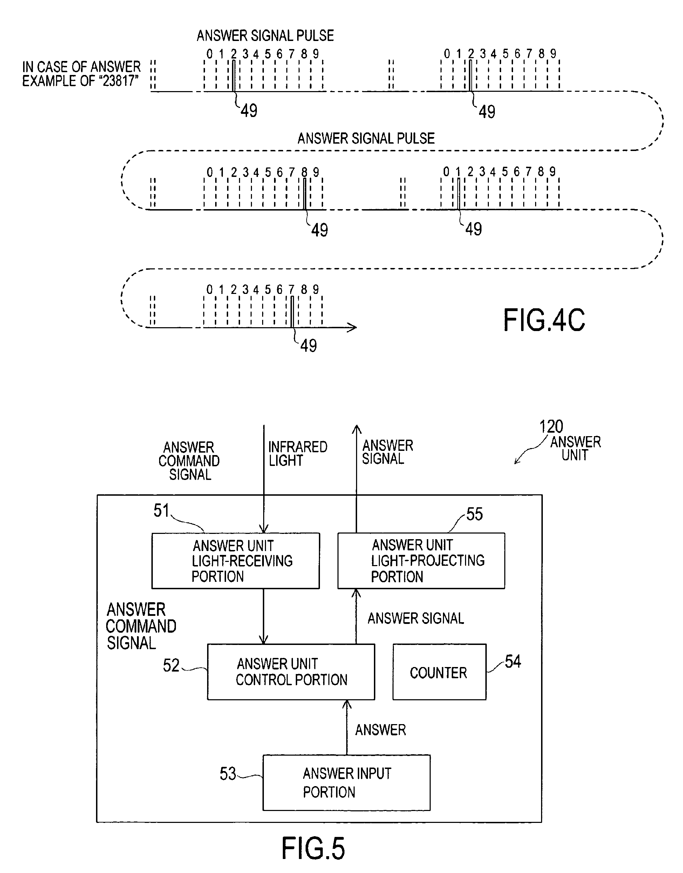

FIG. 4A, FIG. 4B, and FIG. 4C are time charts showing relations between a pulse of a series of answer command signal 40 transmitted by the center unit 100 in the answer totaling and analyzing apparatus 1 and an answer signal pulse 49 of the answer unit 120 responding to the command signal.

The center light-projecting and receiving unit 23 of the center unit 100 transmits a series of infrared light pulse with a pulse width of 500 ns from the center light-projecting and receiving unit 23 to the answer unit 120 via the center relay unit 22 in accordance with a command of the main control unit 21 by an operation of an operator or a chairman. These series of pulses are emitted giving meanings to a transmission interval and the number of pulses, and the meaning is decoded at the receiving side and performing responses corresponding to the meaning.

In the answer command signal 40 as shown in FIG. 4A, there are 16 pulses with intervals of 24 µs at first as an answer unit excitation signal 41. Then, a frame synchronization signal 42 after an interval of 22 µs and a mode command signal 43 composed of plural pulses specifying an answer mode follow. After these pulses synchronizing pulses 44 with intervals of 50 µs follow. A train of these synchronizing pulses 44 specifies timing for an answer specified for each answer unit 120 identified by ID numbers. Each answer period of 250 µs composed of five answer sections of 50 µs is assigned for each answer unit 120 in the case. For example, 1000 sets of pulses for ID composed of five pieces for one set (total 5000 pulses) specifying individual answer timings of the answer units 120 are emitted with intervals of 50 µs for 1000 pieces of answer units 120. The series of signal sets are repeatedly emitted until a stop command is issued from the main control unit 21.

Each responder inputs an answer from an input key provided at an answer input portion 53 of the answer unit 120 held for each unit, and the answer is converted to a pulse signal by the answer unit 120 and is emitted to the center unit 100.

As shown in FIG. 4B, each answer unit 120 at first receives the answer unit excitation pulse 41 from among the answer command signal from the center unit 100 and enters into a standby state, receives the next frame synchronizing pulse 42 and activates a counter of a control portion of the answer unit 120 preparing for a response. Then, the synchronizing pulse train 44 with intervals of 50 µs is received and the number of the pulses is counted. When an answer period 45 in accordance with the ID number of the answer unit 120 is captured, a set of plural windows for emitting answer signal 48 transmitting the answer are set in each answer section 46 within the answer period 45. At time position of the window corresponding to the contents of the answer inputted by the responder is chosen from the windows for answer signal 48, the answer signal pulse 49 is generated and emitted within the window. In the present embodiment, five answer sections 46 are held in the answer period 45 assigned to one answer unit 120, and 10 windows for answer signal 48 with a window width of 2 µs are supposed to be set within each answer section. The time position of the window corresponding to the answer of the responder is selected for every answer section. The answer signal pulse 49 is generated with the pulse width of 500 ns in the selected window and is emitted. The answer signal pulse can be generated at any time position within the window width of 2 µs, but it is desirable to emit in a vicinity of the front edge of the window width taking various errors into account.

As stated above, each answer unit 120 selects the window corresponding to the answer from the set of plural windows for answer signal 48 for each set of the five answer sections 46 dividing inside of the answer period 45 provided for the answer unit 120 for example, and generates the answer signal pulse 49 at the time position as shown in FIG. 4C. A specific example is shown in FIG. 4C when the answer signal corresponding to a numeral of decimal five digits of "2, 3, 8, 1, 7" is transmitted as stated above. Since the answer period is exclusively assigned to the individual plural answer units 120, the answer signal from another unit is not entered in this answer period.

The above-stated 10 pieces set of windows for answer signal 48 within a answer section may be provided at an early half of the answer section 46, at a center portion of the answer section 46, or at a later half of the answer section 46. As shown in FIG. 4C, if the 10 sets of windows for answer signal 48 are provided at the center portion of the answer section 46, it is possible to widen the interval between the synchronizing pulse 44 and the answer signal pulse 49. If the interval between the synchronizing pulse 44 and the answer signal pulse 49 is widened, an effect of the ringing can be avoided, and a stable light emitting and receiving can be realized.

As stated above, a method is used in which a set of plural windows for answer signal 48 divided at the time positions are set in the answer section 46 dividing the answer period 45 specified by the center unit 100, the individual time positions of the plural windows for answer signal 48 are made to have meanings, the window having the meaning corresponding to the answer is selected from the plural windows for answer signal 48, a pulse of the answer is transmitted within the window representing the answer. Consequently, it becomes possible to represent the contents of the answer and transmit as the answer signal from the answer unit 120 with a discrete number of extremely small numbers of pulses.

### (Embodiment 3) Constitution and operation of center unit

The center unit 100 of the present example has a constitution in which the input unit 24 and the large-sized display unit 25 are added to a basic constitution shown in FIG. 1 or FIG. 2, namely the main control unit 21 and the center relay unit 22 composing the answer command signal generating means 101 and the totaling and analyzing means 104, and the center light-projecting and receiving unit 23 composing the answer command signal light-projecting means 102 and the answer signal light-receiving means 103. This constitution follows to a constitution of a center unit described in already applied International Publication No. WO01 and 73630-Al.

Essential points of the constitution are as follows. The main control unit 21 is a computer unit to which software for totalizing and analyzing is installed. Besides, the center relay unit 22 is a unit in which interfaces for input and output are provided to a CPU (central processing unit) and an FPGA (field programmable gate array). Further, the center light projecting and receiving unit 23 is a unit in which interfaces for input and output are provided to the FPGA, a transmission block, and a reception block.

The operation of the center unit 100 is as follows. The main control unit 21 followed to an input from the input unit 24 and send commands to the center relay unit 22 for generating answer command signal. At the center relay unit 22, the answer command from the main control unit 21 is inputted to the CPU of the center relay unit 22. The answer command signal for each of answer units 120 is outputted from the CPU and the FPGA of the center relay unit 22 to which the answer command is inputted. The answer command signal is processed by the FPGA of the center light projecting and receiving unit 23 via the interface, converted into an infrared light at the transmission block to be light emitted to the answer unit 120. The infrared lights of the answer signals from the respective answer units 120 are received by the reception block of the center light-projecting and receiving unit 23, processed by the FPGA of the center light-projecting and receiving unit 23. The signals are processed by the FPGA and the CPU of the center relay unit 22 through the interface of the center relay unit 22. The processed answer signals are transmitted to the main control unit 21 and the totalizing analyzing of the answers are performed.

### (Embodiment 4) Constitution and operation of answer unit

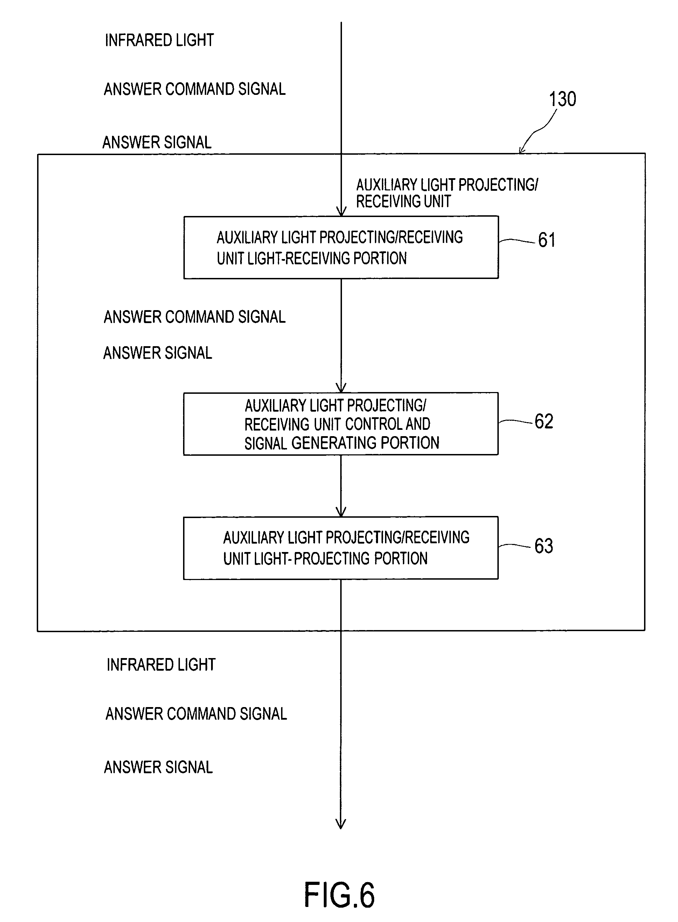

FIG. 5 is a block diagram showing a constitution of the answer unit 120 according to an embodiment of the present invention. The constitution of the answer unit 120 follows to a constitution of the center unit described in the already applied International Publication No. WO 01/0173630-A1.

Essential points of the constitution are as follows. As shown in FIG. 5, the answer unit 120 is constituted by an answer unit light-receiving portion 51 composing the answer command signal light-receiving means 121, an answer unit control portion 52 and an answer input portion 53 composing the answer means 122, and an answer unit light-projecting portion 55 composing the answer signal light-projecting means 123 in FIG. 1. The answer unit light-receiving portion 51 includes an optical filter selecting a wavelength of a light to be received, a photodiode,converting an optical signal into an electrical signal, a preamplifier amplifying the electrical signal, and an amplitude-limiting circuit limiting amplitude to be amplified. Besides, the answer unit control portion 52 includes an FPGA and a CPU, and a counter 54 for detecting an assigned answer period to answer is provided.

According to this constitution, the answer unit light-receiving portion 51 of the answer unit 120 receives the answer command signal from the center unit 100. At the answer unit light-receiving portion 51, only the light having the wavelength within a light-receiving range is selected from the received light using an optical filter. The light signal having the selected wavelength is converted into the electrical signal using a photodiode, amplified using a preamplifier, and the signal having excess amplitude is limited its amplitude using the amplitude-limiting circuit. A nonlinear element such as a digital element can be applied to this preamplifier. The amplifier removes noise components with small amplitude less than a threshold value not outputting for the small amplitude input, and outputting merely for the input voltage over the threshold value. Further, the preamplifier may have a good passing characteristics for the pulse width of the signal and lower passing characteristics for pulses deviated from the signal pulse width in order to eliminate noise signals having pulse widths different from the signal pulse width.

The answer command signal received and converted into the electrical signal at the answer unit light-receiving portion 51 described above is inputted to the answer unit control portion 52. An ID number is set to the answer unit 120. When the answer unit control portion 52 receives the answer command signal 40 shown in FIG. 4A from the answer unit light-receiving portion 51, it activates the counter 54 (answer unit basic clock counter), generates the answer signal pulse 49 corresponding to the answer shown in FIG. 4C to the answer period 45 assigned by the ID number, and transmits to the answer unit light-projecting portion 55. The answer unit light-projecting portion 55 converts the answer signal pulse 49 into an infrared light by a light-emitting diode, and emits to the center unit 100. Incidentally, the ID number specifying the answer unit 120 (for example, a number showing a sequence of the answer period in which the answer unit is to answer) is provided within a memory of the answer unit control portion 52 when the answer unit is handed to a responder. The center unit 100 specifies the responder who gave the answer through this ID number.

### (Embodiment 5) Constitution and operation of auxiliary light projecting and receiving unit

An embodiment of a constitution of the auxiliary light projecting and receiving unit 130 according to the present invention is shown in FIG. 6. In FIG. 6, the auxiliary light-projecting and receiving unit 130 is constituted by an light-receiving portion 61 of the auxiliary light-projecting and receiving unit composing 131 in FIG. 1, an control and signal generating portion 62 of the auxiliary light-projecting and receiving unit composing the relay signal generating means 132 in FIG. 1, and an light-projecting portion 63 of the auxiliary light-projecting and receiving unit composing the relay light-projecting means 133 in FIG. 1. The constitution of the light-receiving portion 61 of the unit is the same constitution as the above-stated answer unit light-receiving portion 51, and the constitution of the light-projecting portion 63 of the unit is the same constitution as the above-stated answer unit light-projecting portion 55.

A light signal arrived at the unit 130 is received at the light-receiving portion 61 of the unit. The signals arrived at the unit 130 is the answer command signal from the center unit 100, the answer signal from the answer unit 120, and the answer command signal and the answer signal arrived at this unit 130 via other auxiliary light-projecting and receiving units. These signals received at the light-receiving portion 61 of the unit are inputted to the control and signal generating portion 62 of the auxiliary light-projecting and receiving unit. At the control and signal-generating portion 62 of the unit, these input signals are processed, and signals having specifications that are originally held by the signals (here, the pulse with a width of 500 ns) are outputted.

The control and signal generating portion 62 of the unit pauses outputting pulses for a certain period after one signal pulse is outputted. The pulse signal controlled as stated above is emitted as an optical pulse from the light-projecting portion 63 of the auxiliary light projecting and receiving unit.

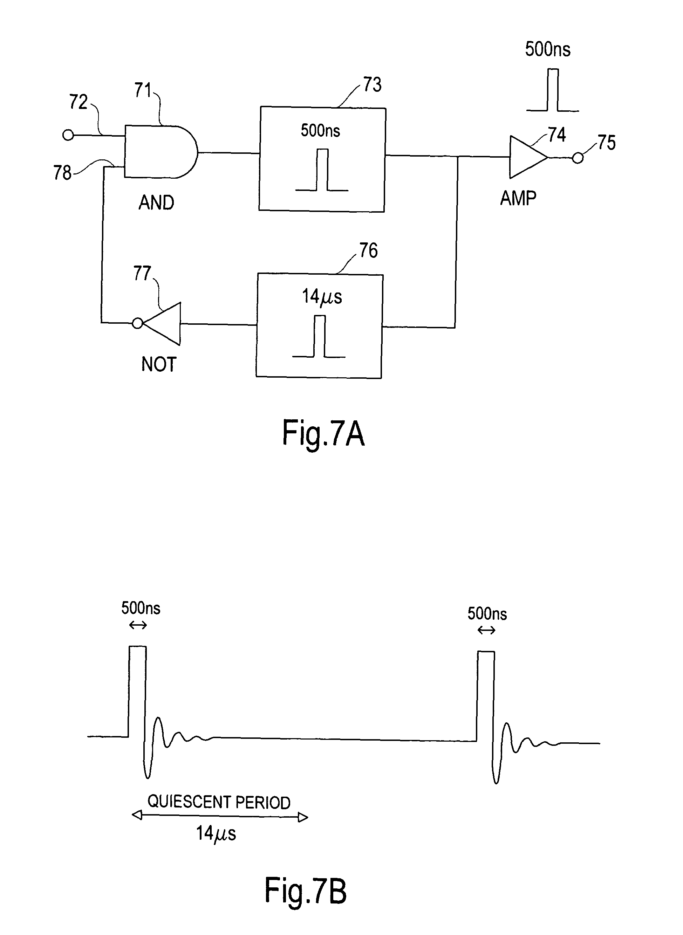

FIG. 7A is a view schematically showing a circuitry of the control and signal-generating portion 62 in the unit 130 according to the present embodiment. In FIG. 7A, the light signal received and converted into the electrical signal at light-receiving portion 61 of the unit is inputted to a first input terminal 72 of an AND circuit 71. An output signal of the AND circuit 71 is inputted to a pulse generation circuit 73, and a pulse with a width of 500 ns is outputted from an output terminal 75 of an amplifier 74 as an output of the pulse generation circuit 73 to be inputted to the light-projecting portion 63 of the auxiliary light-projecting and receiving unit.

The output of the pulse generation circuit 73 is inputted to a pulse circuit 76 generating a pause pulse signal to pause outputting to the pulse generation circuit 73 for a certain period (here, 14 µs). An output pulse of the pulse circuit 76 is inputted to a NOT circuit 77, and an output of the NOT circuit 77 is inputted to a second input terminal 78 of the AND circuit 71. At the AND circuit 71, the pulse from the pulse generation circuit 73 is paused for a period of the pulse width of 14 µs outputted from the NOT circuit 77, even if a signal from the auxiliary light-projecting and receiving unit 61 is inputted to the first input terminal 72.

The pause period is satisfactory if the period has an enough length for avoiding an effect of ringing and so on. The pause period is required, on the other hand, not to disturb a normal light emitting and receiving signal. The requirement is satisfied by limiting the length of the pause period within the minimum length of the signal pulse interval. In FIG. 7B, a case is illustrated as an example in which the pausing period is set at 14 µs. The length is shorter than 15 µs corresponding to the minimum pulse interval of the present example and long enough to avoid the effect such as ringing.

Communication is performed with extremely small number of pulses in the present answer totaling and analyzing apparatus 1 compared with number of pulses in conventional optical communication method. Therefore, a relatively wide pulse interval can be taken and an effective use of a light-emitting diode as that much can be obtained in the apparatus of the present invention. Consequently, the preamplifiers used for the answer unit 120 and the auxiliary light projecting and receiving unit 130 can be relatively simple.

Since the auxiliary light-projecting and receiving unit 130 has an active characteristics of emitting a predetermined pulse and pausing for a certain pausing period just after a light pulse is received and reformed to emitted, the unit 130 can prevent to receive duplicated signals caused by passing a signal through plural transmission paths or by ringing, besides the unit 130 can reform a receive weak optical signal damped by a transmission and emit the signal with an appropriate intensity. The auxiliary light projecting and receiving unit 130 according to the present invention can be termed as an active mirror in contrast to a normal mirror reflecting an incident light as it is.

When the auxiliary light-projecting and receiving unit 130 is installed and disposed to the answer totaling and analyzing apparatus 1 as stated above, it is unnecessary to forcibly enlarge outputs of optical signals transmitted from the center unit 100 and the answer units 120. As a result, a battery operation time can be made long when the battery is used as a power source of the answer unit 120. Since it is unnecessary to forcibly enhance the light receiving sensitivity at the time of receiving signal, it is possible to eliminate an occurrence of ringing with bad effect. Furthermore, as a result of using the auxiliary light-projecting and receiving unit 130 interposed between the center unit 100 and the answer unit 120, mutual signal exchange without any problem can be obtained even if there is a large distance between the center unit 100 and the answer unit 120, or there is an obstacle between them.

The auxiliary light-projecting and receiving unit 130 can be used singly for a meeting room, but as already shown in FIG. 2, plural number of units 130 can be used. When plural units 130 are used in the communication between the answer unit 120 and the center unit 100, the light-emitting and reception may be performed not only via one unit 130 but also via two or more of plural auxiliary light-projecting and receiving units 130.

In the present invention, a time width of the window for answer signal 48 is satisfactory when time width is large enough compared with the time required for actual signal transmission between the answer unit 120 and the center unit 100. The time required for a pulse signal passing through the unit 130 from input portion to the output portion is estimated approximately 200 ns at maximum and a time for a light propagating a space in the meeting room is approximately 300 ns for 100 m.

Consequently, the time width of the window for answer signal 48can be set for example to 1 µs or more, more preferably 2 µs as the time width large enough compared with these time values as stated above. In the present embodiment, the time width is set to be a large value of 2 µs. Then the transmission time of the signal can fall within the time width of the window for answer signal even when the signal passes through the plural auxiliary light-projecting and receiving units 130.

When plural number of auxiliary light-projecting and receiving units 130 are used, it must be avoided to receive ghost signals caused by a same signal passing through plural auxiliary light-projecting and receiving units redundantly. Therefore, a relaying inhibition period is defined by adding pulse duration time to the maximum time of a signal emitted by first auxiliary light-projecting and receiving unit for returning to the first unit passing through another auxiliary light-projecting and receiving unit, and the length of the pausing period of the auxiliary light-projecting and receiving units are set above the time length of the relaying inhibition period. The minimum pulse interval in a signal pulse train of the present apparatus is set to a time interval large enough compared with these times defined above. Therefore, when the time near the minimum pulse interval in the signal pulse train is set as the light-projecting quiescent period of the auxiliary light-projecting and receiving unit 130 for example, it is possible to make the quiescent period fully exceeding the relay prohibition, and the setting of the light-emitting quiescent period of the unit 130 fully accomplishing a role as the unit 130 becomes possible.

### (Embodiment 6) Spatial disposition of auxiliary light projecting and receiving unit

A light-projecting and receiving system of the auxiliary light-projecting and receiving unit 130 is set to be non directional, so that it can receive light signals from the plural answer units 120, the center unit 100, or other auxiliary light-projecting and receiving units 130 in all direction in a meeting room, and can transmit signals in all direction. The auxiliary light-projecting and receiving unit 130 having non directional light-projecting and receiving system has an advantage of simplicity of installation work because an adjustment such as a direction determination is not necessary at all when the device is installed in the meeting room.

The directivity of the light-projecting and receiving system can be tailored by realizing non directivity using conical mirrors in the light-receiving portion 61 of the auxiliary light-projecting and receiving unit and the light-projecting portion 63 of the unit in FIG. 6, or light-receiving unit and light-projecting unit having various directivity are obtained by providing light-receiving portions 61 of the auxiliary light-projecting and receiving unit and light-projecting portions 63 of the unit in FIG. 6 are provided in plural and varying their disposition.

The signal attenuation at light emitting and receiving in a large meeting room can be limited within a predetermined range by disposing every auxiliary light-projecting and receiving units 130 having mutual distances of approximately 20 m to the nearest auxiliary light-projecting receiving unit 130 and/or the center light-projecting and receiving unit 23 for example enabling the all answer units 120 existing in distances within approximately 10 m in a horizontal direction to the center light-projecting and receiving unit 23 or the auxiliary light-projecting and receiving unit 130 in a large meeting room.

The auxiliary light projecting and receiving unit 130 plays a role to relay between the center unit 100 and the answer unit 120. The unit 130 may include light-projecting and receiving system having different directivities such that the light-projecting and receiving system having a directivity directing for the center light-projecting and receiving unit 23, and the non-directional light-projecting and receiving system objecting to the plural answer units 120 inside of the meeting room, are combined and so on.

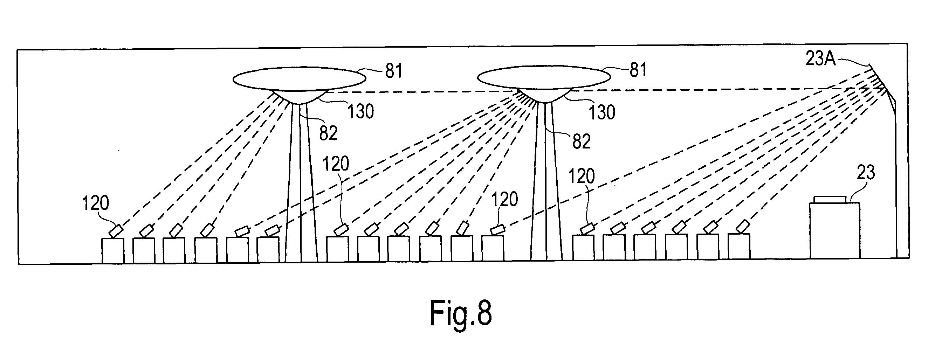

FIG. 8 is a view schematically showing an embodiment of dispositions for the auxiliary light-projecting and receiving units 130 in the answer totaling and analyzing apparatus 1 of the present invention. In FIG. 8, the center light projecting and receiving unit 23 of the center unit 100 and the answer units 120 are connected directly or via the auxiliary light projecting and receiving unit 130 by a light. The units 130 are disposed at an upper space of a meeting room in which the plural answer units 120 are disposed. Balloons 81 filled with helium gas are used for spatial dispositions of the auxiliary light projecting and receiving units 130 to float the units 130. Strings 82 are tied to the balloons, and their positions are kept by these strings. Herewith, it becomes possible to dispose the auxiliary light projecting and receiving units 130 simply without restricted by a state of the meeting room that much.

The auxiliary light-projecting and receiving unit 130 in the answer totaling and analyzing apparatus 1 may be suspended from a ceiling, disposed at a wall surface, or disposed using a stand, in stead of floated using the balloon. A light-projecting and receiving portion 23A of the center light-projecting and receiving unit 23 shown in FIG. 8 can be downsized, and can be disposed on a desk for example, when the auxiliary light-projecting and receiving unit 130 is disposed at a platform of the meeting room or its vicinity.

### (Embodiment 7) Addition of calibration signal

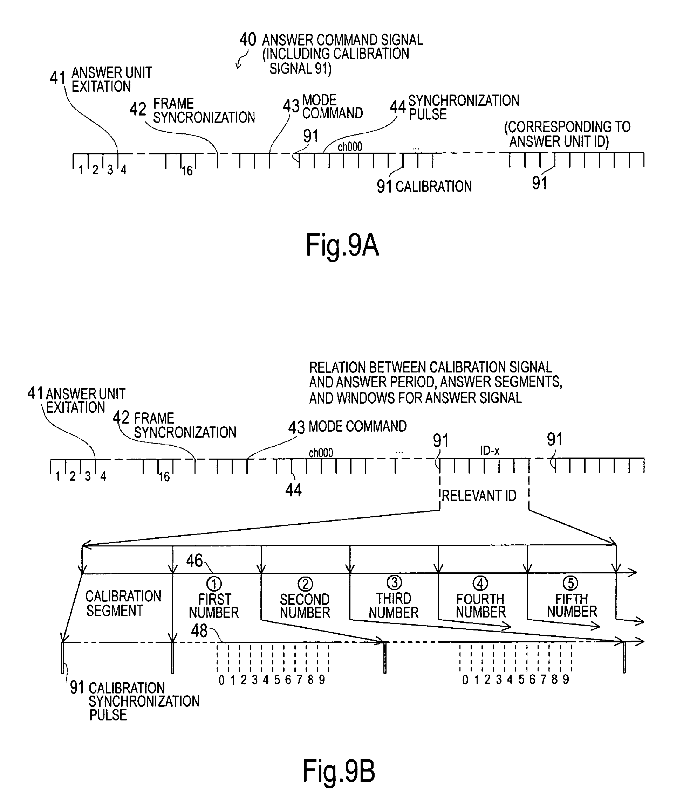

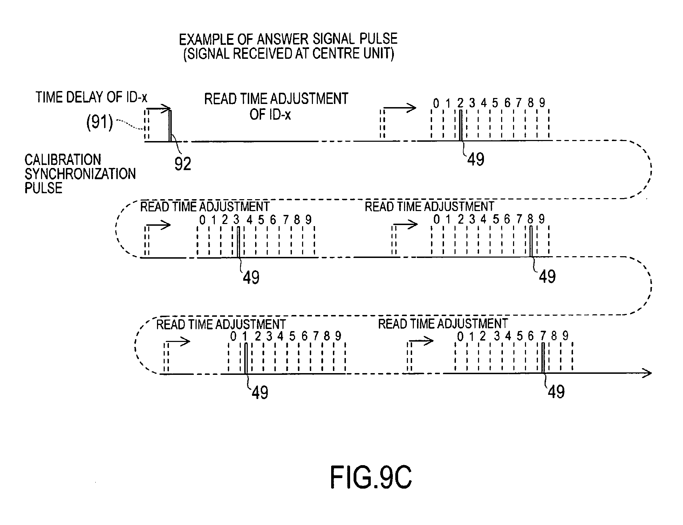

FIG. 9A, FIG. 9B, and FIG. 9C are views showing time charts of signals according to an embodiment of the answer totaling and analyzing apparatus 1 of the present invention including a read time adjusting means in which signals for calibration are added to the answer command signal transmitted by the center unit 100 and the answer signal of the answer unit 120 responding to this. A time required for the communication between the respective answer units 120 and the center unit 100 is measured by the calibration signals and arrived times of the answer signals from the respective answer units 120. And every read times for the individual answer unit 120 are adjusted at the center unit by the measured time of the communication of the calibration and the answer signal.

In FIG. 9A, the answer command signal 40 from the center light-projecting and receiving unit 23 of the center unit 100 is transmitted in a format in which pulse trains of a set of total six pulses composed of a calibration pulse 91 and five synchronizing pulses 44, are disposed for the number of answer units to be used after respective pulses of an answer unit excitation signal 41, a frame synchronization signal 42, a mode command signal 43. The synchronizing pulses 44 specify a start of the answer period 45 and the answer sections 46 for each answer unit 120. The calibration pulse 91 is disposed at a beginning of each answer period. There is no special limit as for a pulse width of the calibration pulse 91. Here, the pulse width is set to be the same pulse width with the synchronizing pulse 44 to avoid a complication.

As shown in FIG. 9B, each answer unit 120 becomes to be a standby state responding to the answer unit excitation pulse 41 from the center unit 100, activates the counter 54 of the answer unit control portion receiving the next frame synchronizing pulse 42, prepares a setting of the window for answer signal 48, and prepares for a response corresponding to the received mode command signal 43.

FIG. 9C is a view showing a calibration response pulse 92 and an answer signal pulse 49 of each answer unit 120 viewed from the center unit 100. Each answer unit 120 counts the number of pulses when the synchronizing pulse train 44 having the calibration pulse 91 is received, and captures the answer period 45 accorded with the ID number of the answer unit 120. Each answer unit 120 captures a beginning pulse of the answer period 45 as the calibration pulse 91, transmits the calibration response pulse 92 immediately after the calibration pulse 91 is received, and subsequently, transmits the answer signal pulse 49 at a time position of the window selected by the answer of the responder from among the windows for answer signal 48 supposed in the respective answer sections 46.

The center relay unit 22 of the center unit 100 measures each time required for transmission from emitting of the calibration pulse 91 by an answer command of the main control unit 21 until arriving of calibration response pulse 92 from each answer unit 120 to the the center relay unit 22 of the center unit 100, and performs an alignment of a time to read the answer signal from each answer unit 120 on a time base based on the required time for transmission from every answer units 120. The center relay unit 22 appropriately can adjust the read time of the answer signal for each answer unit 120 using the required time for transmission stated above. Then, it becomes unnecessary to adjust the time width of the window for delay of answer signal 49, taking fluctuation width of arrival times of the answer signals due to the difference of distances between the answer units and the center unit into account.
As a result, the time width of the window 48 for answer signal 49 can be set narrower. As the time width of the window 48 for answer signal 49 can be narrower, it becomes possible to increase an information amount of the answer signals by increasing the number of windows of the window 48 for answer signal 49 in the answer sections 46 within the respective answer periods 45, or the number of the answer sections 46 within the respective answer periods 45. Furthermore, it becomes possible to reduce a communication time, or to significantly increase the number of the answer units 120 to be used simultaneously. For example, it becomes possible to reduce the width of the window for answer signal 48 to be 1 µs or less and to make the number of the answer units 120 to be 5000 pieces or more.

### Industrial Applicability

An answer totaling and analyzing apparatus of the present invention can be used at a large meeting room and can be used with many answer units which are considered to be difficult and unable to be realized up to now. Then it becomes possible to perform a convenient and stable answer totalizing and analyzing. In addition, it becomes possible to perform a quick signal transmission even if the number of answer units is increased, and therefore, totalized results can be shown to responders immediately. Besides, restrictions for using the apparatus at a large meeting room and a meeting room with obstructions are removed, and a stable answer totalizing and analyzing becomes possible even when it is used at a large meeting room and a meeting room with obstructs. Consequently, it is expected that scope of applying the answer totaling and analyzing apparatus can be significantly expanded.

## Claims

1. An answer totaling and analyzing apparatus, comprising:
a center unit; plural answer units; and an auxiliary light-projecting and receiving unit, in which
the center unit comprises:
an answer command signal generating means generating a signal to command a transmission of an answer signal and generating synchronizing pulses assigning answer periods in which plural windows for answer signal are set on a time base for the plural answer units respectively;
an answer command signal light-projecting means projecting the answer command signal as an optical signal;
an answer signal light-receiving means receiving the answer signals light from the plural answer units; and
an totaling and analyzing means detecting, totaling, and analyzing answers from the answer signal light-receiving means,
the plural answer units respectively comprise:
an answer command signal light-receiving means receiving the answer command signal light emitted by the center unit;
an answer means selecting the window for answer signal at a time position corresponding to an answer from among plural windows for answer signal supposed within the answer period assigned by the answer command signal, and transmitting a pulse signal within the window as an answer signal to represent contents of the answer as the answer signal; and
an answer signal light-projecting means projecting the pulse signal transmitted by the answer means as optical signal, and
the auxiliary light-projecting and receiving unit comprises:
a relay light-receiving means receiving light signals emitted by any one of the center unit, the plural answer units, or the other auxiliary light-projecting and receiving unit when plural auxiliary light-projecting and receiving units exist;
a relay signal generating means generating a relay signal in accordance with the received light signal; and
a relay light-projecting means projecting the relayed signal as an optical signal.

2. The answer totaling and analyzing apparatus according to claim 1,
wherein the answer period defined by the answer command signal from the center unit is divided into plural answer sections by synchronizing pulses, and the answer section having a set of plural windows individually for an answer signal in which the plural answer units individually transmit the answer signals set in the respective answer sections; and the answer signal from each of the plural answer units is the one in which the pulse of the answer signal is respectively transmitted and emitted a light pulse in the window for answer signal selected to correspond to an answer from among the plural windows for answer signal respectively set in the plural answer sections within the answer period.

3. The answer totaling and analyzing apparatus according to claim 1,
wherein the auxiliary light-projecting and receiving unit includes a light-emitting pausing means pausing light-emitting for a time shorter than a time of the minimum pulse interval in a regular signal pulse train immediately after receiving one signal light pulse from one of the other units and emitting for relaying.

4. The answer totaling and analyzing apparatus according to claim 1,
wherein the auxiliary light-projecting and receiving unit is disposed at an upper space of a meeting room where the answer totaling and analyzing apparatus is used.

5. The answer totaling and analyzing apparatus according to claim 1,
wherein the auxiliary light-projecting and receiving unit includes a balloon to thereby spatially dispose at an upper portion of the meeting room where the answer totaling and analyzing apparatus is used.

6. The answer totaling and analyzing apparatus according to claim 1,
wherein the center unit comprises a calibration signal transmitting means transmitting a calibration signal preceding to a signal respectively specifying the answer period for the plural answer units in the answer command signal, the plural answer units respectively comprise calibration response signal transmitting means transmitting a calibration response signal preceding to the answer signal with responding to the calibration signal, and the center unit further comprises a read time adjusting means measuring signal transmission times between the center unit and the respective plural answer units from time differences between the calibration signal transmitted by the center unit and the respective calibration response signals replied from the respective plural answer units, and adjusting read times of the answer signals from the respective plural answer units based on the measured signal transmission times.
